# EUROPÄISCHE PATENTSCHRIFT

(11) **EP 2 072 296 B1**
(45) Veröffentlichungstag und Bekanntmachung des Hinweises auf die Patenterteilung: **13.08.2014**
(21) Anmeldenummer: 08020214.6
(22) Anmeldetag: 20.11.2008
(51) Int. Cl.: B60H 1/00

(54) **Vorrichtung zur Kühlung einer Wärmequelle eines Kraftfahrzeugs**
Device for cooling a heat source of a motor vehicle
Dispositif destiné au refroidissement d'une source de chaleur d'un véhicule automobile

(30) Priorität: 18.12.2007 DE 102007061577
(43) Veröffentlichungstag der Anmeldung: 24.06.2009
(73) Patentinhaber: Behr GmbH & Co. KG, 70469 Stuttgart (DE)
(72) Erfinder: Feuerecker, Günther, 70567 Stuttgart (DE); Wehowski, Manuel, 70563 Stuttgart (DE)
(74) Vertreter: Grauel, Andreas

(56) Entgegenhaltungen:
- EP-A- 1 637 709
- DE-A1- 4 238 364
- DE-A1- 19 930 148
- DE-A1-102005 048 241
- DE-C1- 4 408 960

## Beschreibung

Die Erfindung betrifft eine Vorrichtung zur Kühlung einer Wärmequelle eines Kraftfahrzeugs nach dem Oberbegriff des Anspruchs 1, wie sie in DE 44 08 960 C offenbart ist.

Bei modernen Kraftfahrzeugen besteht teilweise die Aufgabe, eine temperaturerhöhende Einheit bzw. Wärmequelle zu kühlen. Eine solche Wärmequelle kann zum Beispiel eine Fahrbatterie sein, wobei es sich bei dem Kraftfahrzeug um ein Hybridfahrzeug oder auch um ein reines Elektrofahrzeug handeln kann. Bei der Kühlung einer solchen Einheit kann es zudem darauf ankommen, nicht nur eine ausreichend große Kühlleistung bereitzustellen, sondern auch eine zu starke Kühlung zu vermeiden, um zum Beispiel die Lebensdauer einer Fahrbatterie durch Gewährfeistung eines optimalen Intervalls der Betriebstemperatur zu verbessern.

Es ist bekannt, zur Kühlung einer Fahrbatterie einen Verdampfer eines Kältekreises vorzusehen, wobei der Kältekreis im Übrigen als Klimaanlage zur Luftkonditionierung des Fahrgastraums ausgelegt ist. Eine solche Anordnung ist bei niedrigen Außentemperaturen (Winterbetrieb) problematisch, da die Verdampfertemperaturen gegebenenfalls zu niedrig werden können. Zudem besteht die Gefahr, dass saugseitig des Verdichters Drücke unterhalb des Umgebungsdrucks auftreten, wodurch Luft und Feuchtigkeit über den Verdichter eindringen und den Kältekreis schädigen können.

Es ist die Aufgabe der Erfindung, eine Vorrichtung zur Kühlung eines elektrischen Energiespeichers eines Kraftfahrzeugs anzugeben, deren Betrieb auf einfache Weise an wechselnde Umgebungsbedingungen angepasst werden kann.

Die Aufgabe wird für eine eingangs genannte Vorrichtung erfindungsgemäß mit den kennzeichnenden Merkmalen des Anspruchs 1 gelöst. Durch die Möglichkeit der Temperaturerhöhung des Kältemittels im Kondensatorbereich wird regelmäßig auch der Druck des Kältekreises angehoben. Zudem kann damit das Temperatumiveau des Verdampfers insgesamt erhöht werden, so dass unerwünscht niedrige Temperaturspitzen des Verdampfers im Betrieb vermieden werden. Hierdurch kann einstellbar wählbar auch bei niedrigen Außentemperaturen, insbesondere unter 0° C, ein Betrieb des Kältekreises bei Verdampfertemperaturen ermöglicht werden, wie sie einem Normalfall bei Umgebungstemperaturen über 0° C, insbesondere über 10 °C entsprechen. In einer idealisierten Betrachtung bleibt dabei die zur Verfügung stehende Kühlleistung bezüglich des elektrischen Energiespeichers weitgehend unverändert.

Besonders bevorzugt handelt es sich bei dem elektrischen Energiespeicher um, eine Lithium-Ionen-Batterie. Der Energiespeicher kann eine Fahrbatterie des Fahrzeugs sein, das zum Beispiel als Hybridfahrzeug oder auch als reines Elektrofahrzeug ausgebildet sein kann. Insbesondere moderne Fahrbatterien, hier vor allem Lithium-Ionen-Batterien, erfordern aus Gründen der hohen Leistungsdichte, der Betriebssicherheit und der Optimierung der Lebensdauer ein unter allen äußeren Bedingungen optimal angepasstes Kühlsystem. Im Interesse einer hohen Batterieleistung und einer optimierten Lebensdauer sind dabei auch zu niedrige Temperaturen zu vermeiden.

Bei einer bevorzugten Ausführungsform der Erfindung umfasst das Wirkmittel zumindest eine Stellklappe, wobei eine Beströmung des Kondensators mit Luft mittels der Stellklappe wählbar einstellbar ist. Im Betrieb bei niedrigen Außentemperaturen kann somit die Durchströmung des Kondensators mit kalter Außenluft verringert werden, so dass das Temperaturniveau des Kältemittels im Kondensator ansteigt. Dabei kann sehr wohl die gleiche Kühl leistung des Kältekreises wie bei hohen Außentemperaturen erzielt werden, indem die Wärmemenge nicht auf einen großen Volumenstrom der Kühlluft bei kleiner Temperaturdifferenz, sondern auf einen kleinen Volumenstrom bei großer Temperaturdifferenz übertragen wird.

Bei einer zweckmäßigen Detailgestaltung ist es vorgesehen, dass die Steilklappe eine luftbeströmbare Oberfläche des Kondensators zumindest teilweise überdeckt. Durch Freigabe oder Verschließen der Oberfläche kann die Menge an den Kondensator beströmender Luft dann wählbar variiert werden, so dass ein Anheben des Temperaturniveaus erfolgt.

Alternativ oder ergänzend kann das Kondensatorglied eine wählbare Bypassführung umfassen, wobei ein Luftstrom den Kondensator mittels der Bypassführung zumindest teilweise umgehen kann. Durch einen solchen Bypass kann eine ausreichende Luftmenge zu einem hinter dem Kondensator angeordneten Wärmetauscher geführt oder anderweitig genutzt werden.

Allgemein bevorzugt umfasst das Kondensatorglied einen antreibbaren Lüfter, um die Luftströmung zu beeinflussen. Besonders vorteilhaft ist dabei eine Förderrichtung des Lüfters wählbar umkehrbar. Insgesamt kann durch eine geeignete Ansteuerung des Lüfters, gegebenenfalls in Verbindung mit Stellklappen, ein Wirkmittel im Sine der Erfindung bereitgestellt werden. Dies gilt zumindest dann, wenn der Lüfter in seiner Förderrichtung zur Erhöhung der Kondensatortemperatur umgekehrt wird.

Bei einer weiterhin alternativen oder ergänzenden Ausführungsform ist ein den Kondensator durchströmender Luftstrom zumindest teilweise zu dem Kondensator rückführbar. Ein solcher gezielt herbeigeführter Kurzschluss der Luftströmung führt ebenfalls auf einfache Weise zu einer Temperaturerhöhung am Kondensator.

Insbesondere im Fall eines Fahrzeugs mit Verbrennungsmotor umfasst das Kondensatorglied vorteilhaft einen weiteren Wärmetauscher, insbesondere einen Kühlmittelkühler und/oder einen Ladeluftkühler des Verbrennungsmotors. Solche Stapel von Wärmetauschem werden nach Möglichkeit in der Fahrzeugfront angeordnet, wo sie vom Fahrtwind unmittelbar umströmt werden können. In der Regel befindet sich dabei der Kondensator in Fahrtrichtung vor einem Kühlmittelkühler des Verbrennungsmotors. Die Wärmetauscher sind zumeist in einer die Luft führende Lüfterzarge angeordnet, in der auch ein angetriebener Lüfter angebracht ist.

Bei einer allgemein bevorzugten Ausführungsform umfasst der Kältekreis zumindest einen zweiten Verdampfer, insbesondere einen Klimaverdampfer zur Luftkonditionierung eines Fahrgastraums. Auf diese Weise kann der erste Verdampfer zur Kühlung der Wärmequelle kostengünstig in die Klimaanlage des Fahrzeugs integriert sein.

Vorteilhaft ist der zweite Verdampfer über ein stellbares Ventil von dem Kältekreis absperrbar, so dass insbesondere im Winterbetrieb der zweite Verdampfer außer Funktion gesetzt werden kann, wobei durch geeignete Anordnung des Absperrventils insbesondere hochdruckseitig des zweiten Verdampfers ein Versacken von Kältemittel in den zweiten Verdampfer und/oder seine Leitungen verhindert wird.

Vorteilhaft kann niederdruckseitig des zweiten Verdampfers ein insbesondere als Rückschlagventil ausgebildetes Ventilglied angeordnet sein. Durch ein solches Rückschlagventil kann auf einfache und zuverlässige Weise ein saugseitiges Versacken von Kältemittel in den zweiten Verdampfer verhindert werden, wenn dieser z.B. im Winterbetrieb deaktiviert ist.

Allgemein zweckmäßig ist der zweite Verdampfer in einem zu dem ersten Verdampfer parallelen Zweig angeordnet, so dass der zweite Verdampfer auf einfache Weise wählbar außer Betrieb gesetzt werden kann. Grundsätzlich ist aber auch eine serielle Anordnung der Verdampfer im Sinne der Erfindung denkbar. Auch in einer solchen Anordnung kann einer der Verdampfer wählbar außer Betrieb gesetzt werden, zum Beispiel mittels einer schaltbaren Bypassleitung des Kältemittels.

Durch geeignete Ansteuerung des Absperrventils des zweiten Verdampfer sowie eines Absperrventils des ersten Verdampfers kann Kältemittel aus dem außer Betrieb gesetzten zweiten Verdampfer abgesaugt werden, so dass ein Versacken von Kältemittel in den zweiten Verdampfer nicht nur verhindert wird, sondern auch reversibel ist.

Bei einer besonders bevorzugten Ausführungsform der Erfindung ist zwischen den Zweigen des ersten Verdampfers und des zweiten Verdampfers eine insbesondere absperrbare Verbindungsleitung vorgesehen. Hierdurch kann durch geeignete Ansteuerung bzw. Öffnung der Verbindungsleitung Kältemittel aus dem außer Betrieb gesetzten zweiten Verdampfer abgesaugt werden. Durch die Verbindungsleitung wird das Kältemittel dabei so geführt, dass die Gefahr von Flüssigkeitsschlägen im Verdichter minimiert ist. Bei einer zweckmäßigen Detailgestaltung mündet die Verbindungsleitung in dem Zweig des ersten Verdampfers hochdruckseitig des ersten Verdampfers. Ein zeitweiser Absaugbetrieb zur Entleerung des stillgelegten zweiten Verdampferzweigs kann dann durch Öffnen der Verbindungsleitung und zugleich hochdruckseitiges Schließen des ersten Verdampfers oberhalb der Einmündung der Verbindungsleitung mittels eines dort vorgesehenen Absperrventils bewirkt werden.

Je nach Auslegung des Kältekreises kann die Verbindungsleitung in dem Zweig des zweiten Verdampfers hochdruckseitig des zweiten Verdampfers münden oder alternativ auch niederdruckseitig münden. Eine niederdruckseitige Einmündung ist besonders dann vorteilhaft, wenn in einer möglichen Ausführungsform zumindest ein dritter, insbesondere in einem parallelen Zweig angeordneter Verdampfer vorgesehen ist. Dabei können zweiter Verdampfer und dritter Verdampfer zum Beispiel ein Frontverdampfer und ein Heckverdampfer der Klimaanlage sein.

Allgemein vorteilhaft kann saugseitig des Verdichters ein Sammler, insbesondere ein Niederdrucksammler, vorgesehen sein. Ein solches Bauelement schützt den Verdichter zuverlässig vor Flüssigkeitsschlägen und kann ganz allgemein ergänzend vorgesehen werden.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert_
- Fig. 1: zeigt eine schematische Darstellung einer ersten Ausführungsform einer erfindungsgemäßen Vorrichtung.
- Fig. 2: zeigt eine schematische Detaildarstellung eines Kondensatorglieds der Vorrichtung aus Fig. 1.
- Fig. 3: zeigt ein Kondensatorglied einer zweiten Ausführungsform der Erfindung.
- Fig. 4: zeigt ein Kondensatorglied einer dritten Ausführungsform der Erfindung.
- Fig. 5: zeigt eine weitere Ausführungsform der Erfindung mit abtrennbaren Verdampferzweigen.
- Fig. 6: zeigt eine weitere Ausführungsform der Erfindung mit einer Verbindungsleitung zwischen parallelen Verdampferzweigen.
- Fig. 7: zeigt eine weitere Ausführungsform der Erfindung mit drei Verdampferzweigen.
- Fig. 8: zeigt eine Abwandlung der Ausführungsform aus Fig. 7.

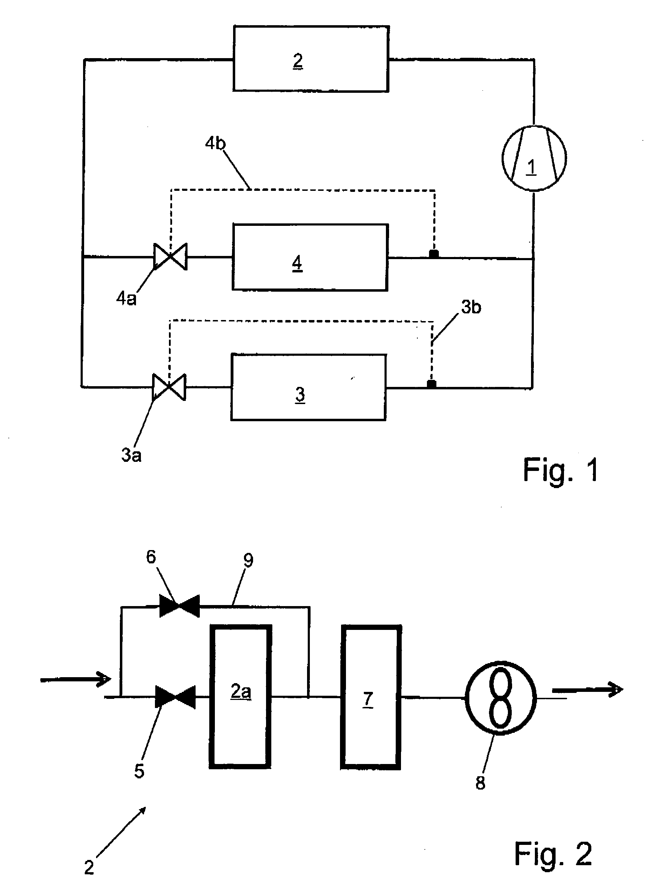

Die in Fig. 1 und Fig. 2 schematisch dargestellte, erfindungsgemäße Vorrichtung gemäß einem ersten Ausführungsbeispiel umfasst einen in einem Kraftfahrzeug angeordneten Kältekreis mit einem Verdichter 1, einem in Strömungsrichtung nachfolgenden Kondensatorglied 2 und zwei parallelen Verdampferzweigen.

In dem ersten Verdampferzweig ist ein erster Verdampfer 3 vorgesehen, dem hochdruckseitig ein erstes Expansionsventil 3a vorgeordnet ist. Das Expansionsventil 3a ist auf bekannte Weise als regelbares, thermostatisches Expansionsventil ausgebildet und hat entsprechend eine sensorische Verbindung 3b zur Niederdruckseite des Verdampfers 3, um mittels dort anliegender Werte von Druck und/oder Temperatur das Expansionsventil 3a zu regeln.

In dem zweiten Verdampferzweig ist auf zum ersten Verdampferzweig analoge Weise ein zweiter Verdampfer 4 mit vorgeordnetem geregeltem Expansionsventil 4a und sensorischer Verbindung 4b angeordnet. Der zweite Verdampfer 4 ist ein Klimaverdampfer zur Konditionierung von Luft eines Fahrgastraums des Kraftfahrzeugs.

Der erste Verdampfer 3 steht mit einer Wärmequelle in Form einer Fahrbatterie auf Lithium-Ionen-Basis (nicht dargestellt) in thermischem Kontakt, um diese Fahrbatterie zu temperieren. Vorrangig ist unter Temperierung eine Kühlung der Batterie zu verstehen, es kann sich aber unter besonderen Umständen auch um eine Erwärmung handeln, zum Beispiel bei einer Kaltstartphase des Fahrzeugs. Hierzu könnte der Kältekreis umgekehrt werden oder andere geeignete Maßnahmen getroffen werden.

Unter einer thermischen Verbindung von Verdampfer 3 und Wärmequelle ist im Sinne der Erfindung jede geeignete Art von Wärmeaustausch zu verstehen. Dies umfasst die Möglichkeit einer Kühlung durch Diffusion bzw. unmittelbaren Kontakt der Batterie mit dem Verdampfer, der hierzu als Kühlkörper ausgebildet sein kann, als auch andere Möglichkeiten wie zum Beispiel Wärmerohre oder Kühlkreisläufe zur thermischen Verbindung des ersten Verdampfers 3 mit der Wärmequelle.

Das Kondensatorglied 2 umfasst gemäß der in Fig. 2 gezeigten Ausführung einen Kondensator 2a in Form eines luftdurchströmbaren Wärmetauschers sowie Stellklappen 5, 6 zur Luftführung, durch die ein Wirkmittel zur Temperaturerhöhung des Kondensators 2a ausgebildet ist. Die Luftströmungsrichtung ist mittels Pfeilen angedeutet. In Strömungsrichtung ist hinter dem Kondensator 2a ein weiterer Wärmetauscher in Form eines Kühlmittelkühlers 7 eines Verbrennungsmotors des Kraftfahrzeugs vorgesehen. Dem ist wiederum ein elektrisch angetriebener Lüfter 8 nachgeordnet.

Frontseitig des Kondensators 2a ist eine erste Stellklappe 5 vorgesehen, die zum Beispiel nach Art einer wählbar verstellbaren Jalousie ausgebildet ist und mittels der zumindest ein Teil der Oberfläche des Kondensators für die Luftdurchströmung verschlossen werden kann. Weiterhin ist eine den Kondensator nach Art eines Bypasses umlaufende Luftführung 9 vorgesehen, in der ebenfalls eine wählbar stellbare Stellklappe 6 angeordnet ist. Der Bypass 9 mündet hinter dem Kondensator, aber vor dem Kühlmittelkühler 7. Ein solcher Bypass ist in den Fällen sinnvoll, in denen ein Verschließen des Kondensators auch eine erhebliche Beeinflussung der Kühlleistung des weiteren Wärmetauschers 7 bedeuten würde. Dies ist nicht in allen Fällen notwendig, da der Kondensator 2a auch eine kleinere Oberfläche aufweisen kann als ein Kühlmittelkühler eines Verbrennungsmotors, oder eventuell Leckluftströme bereits eine ausreichende Kühlleistung im Wärmetauscher 7 bewirken können.

Die Erfindung funktioniert nun wie folgt:

Durch das zumindest teilweise Verschließen des Kondensators gegen Luftdurchströmung wird ein Ansteigen der Temperatur des Kältemittels und somit auch des Drucks im Kondensator bewirkt. Ein neues Gleichgewicht stellt sich in vereinfachter Betrachtung im Wesentlichen dadurch ein, dass bei ausreichend hoher Temperatur des Kondensators 2a auch der reduzierte Luftvolumenstrom durch seine größere Erhitzung die an der Batterie anfallende Wärmemenge vollständig abführt. Der Wärmeübergang der Batterie auf den ersten Verdampfer 3 kann dann ebenfalls auf einem gegenüber einem unbeeinflussten Kondensator höheren Temperaturniveau erfolgen, so dass auch im Winter und insbesondere bei starkem Frost eine zu tiefe Batterietemperatur vermieden wird. Zudem wird durch das im Kältekreis insgesamt erhöhte Druckniveau erreicht, dass der Absolutdruck saugseitig des Verdichters 1 dauerhaft oberhalb von 1 bar gehalten werden kann, was aus Gründen der Betriebssicherheit erforderlich ist.

Um die Temperatur- und Druckerhöhung zu veranlassen, ist zweckmäßig ein entsprechender Sensor im Hochdruckbereich des Kältekreises vorgesehen, insbesondere ein Drucksensor. Entsprechend wird zum Beispiel die Jalousie 5 geschlossen, sobald der Drucksensor im Hochdruckzweig einen zu geringen Wert anzeigt.

Die vorgenannten Aspekte gelten sowohl für Kältekreise mit herkömmlichen Kältemittel wie zum Beispiel R134a als auch für CO2-Kältekreise (Kältemittel R744).

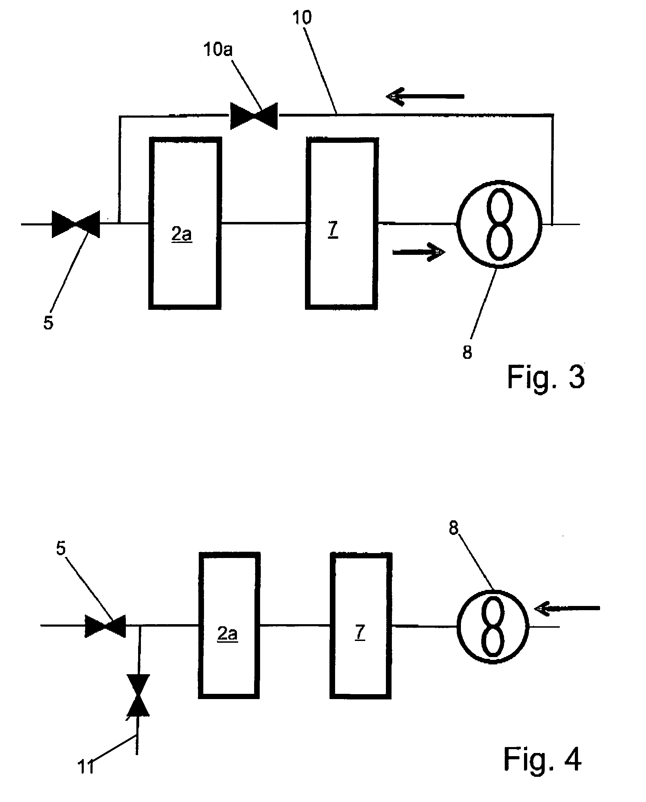

Eine weitere Ausführungsform der Erfindung ist in Fig. 3 dargestellt. Hier umfasst das Kondensatorglied 2 neben dem Kondensator 2a und der ersten Stellklappe 5 eine über eine Stellklappe 10a absperrbare bzw. in ihrem Querschnitt veränderbare Rückführleitung 10. Die Rückführleitung 10 beginnt hinter dem Lüfter 8 und mündet hinter der ersten Stellklappe 5, aber noch vor dem Kondensator 2a. Durch die Rückführleitung 10 ist zumindest ein Teil der den Kondensator 2a durchströmenden Luft zu seinem Eintritt wählbar rückführbar, so dass durch gezielte Erzeugung eines Strömungskurzschlusses ebenfalls eine Erhöhung der Kondensatortemperatur erreicht wird. Eine solche ansteuerbare Rückführleitung bzw. wählbare Strömungsmittel zur Erzeugung eines Strömungskurzschlusses sind ebenfalls Wirkmittel im Sinne der Erfindung.

Eine weitere Ausführungsform ist in Fig. 4 dargestellt. Hierbei ist der Lüfter 8 bezüglich seiner Förderrichtung wählbar umschaltbar ausgelegt, wobei Fig. 4 erkennbar an dem Strömungspfell die umgekehrte Förderrichtung darstellt. Eintrittsseitig des Kondensators 2a ist wiederum eine erste Stellklappe 5 angeordnet, um den Kondensator bei Bedarf zu verschließen. Zwischen Steilklappe 5 und Kondensator 2a ist ein absperrbarer Abluftkanal 11 vorgesehen.

In der dargestellten umgekehrten Förderrichtung des Lüfters 8 ist der Abluftkanal 11 geöffnet und die Stellklappe 5 geschlossen. Somit durchströmt auch bei höheren Fahrgeschwindigkeiten der Luftstrom zunächst den Kühlmittelkühler 7 und dann den Kondensator 2a, wodurch dieser in seinem Temperaturniveau angehoben wird. Eine noch deutlichere Anhebung der Temperatur kann erreicht werden, wenn der Abluftkanal 11 zwischen dem Kondensator 2a und dem Wärmetauscher 7 angeordnet wird.

Wesentlich im Sinne der Erfindung ist die ansteuerbare Anhebung des Temperatumiveaus des Kältemittels im Bereich des Kondensators. Die hierzu erforderlichen Maßnahmen sind nicht auf die Beeinflussung der Führung von Kühlluft beschränkt. Es ist auch denkbar, dass der Kondensator zum Beispiel eine schaltbare Bypassleitung für das Kältemittel aufweist, mittels der ein Teil des Kältemittels den Kondensator bzw. seine Kühlflächen umgehen kann.

Sämtliche vorstehend beschriebenen Beispiele für Kondensatorglieder 2 sind mit jedem der vorstehend und nachstehend beschriebenen Ausführungsbeispiele von Kältekreisen kombinierbar, wann immer in einem Kältekreis von einem Kondensatorglied die Rede ist.

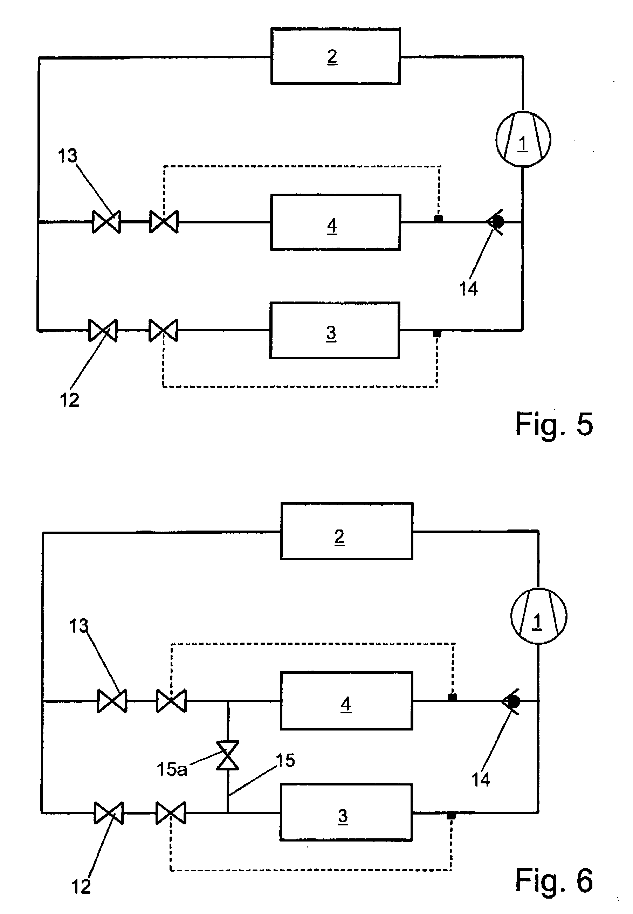

Ein weiteres Ausführungsbeispiel der Erfindung ist in Fig. 5 dargestellt. Im Unterscheid zum ersten Ausführungsbeispiel befindet sich in jedem der Verdampferzweige oberhalb der Verdampfer 3, 4 jeweils ein schaltbares Absperrventil 12, 13. Hierdurch können die Verdampferzweige jeweils gezielt deaktiviert werden. Dies hat besonders für den Zweig des Klimaverdampfers 4 im Winterbetrieb Bedeutung, da dieser bei niedrigen Außentemperaturen zumeist nicht benötigt wird.

Zudem kann durch die dichte Absperrung des Verdampfers 4 ein Versacken von flüssigem Kältemittel in den stillgelegten Zweig verhindert werden, was andernfalls zu Betriebsstörungen des Kältekreises führen könnte. Als weitere Maßnahme gegen ein Versacken von Kältemittel ist niederdruckseitig des Klimaverdampfers 4 zudem ein Rückschlagventil 14 vorgesehen, so dass auch saugseitig des Verdichters 1 kein Kältemittel in den stillgelegten Verdampferzweig versacken kann.

Um versacktes Kältemittel aus dem stillgelegten Verdampferzweig zu entfernen kann das Ventil 12 geschlossen werden. Da jetzt kein Kältemittel in den Verdampfer 3 nachströmt, wird der Saugdruck abfallen. Sobald der Saugdruck niedriger ist als der Druck im stillgelegten Verdampfer 4, wird über das Rückschlagventil 14 Kältemittel in den aktiven Kreis strömen. Dieser Vorgang wird nur eine definierte kurze Zeitspanne durchgeführt, um Schäden am Verdichter zu vermeiden. Gegebenenfalls kann er mehrmals durchgeführt werden.

Zum Schutz gegen Versacken des Kältemittels zeigt Fig. 6 eine gegenüber dem Beispiel nach Fig. 5 eine weiter verbesserte Ausführungsform der Erfindung. Zusätzlich zum vorhergehenden Ausführungsbeispiel ist eine Zweigleitung 15 zwischen den parallelen Verdampferzweigen vorgesehen, die über ein Absperrventil 15a wählbar verschließbar ist und jeweils hochdruckseitig vor den Verdampfern 3, 4 einmündet. Im normalen Betrieb ist das Ventil 15a der Zweigleitung 15 geschlossen, so dass die Zweigleitung keine Funktion hat.

Um trotz gesperrtem Ventil 13 und Rückschlagventil 14 eventuell in den stillgelegten Verdampferzweig versacktes Kältemittel zu entfernen, kann das Ventil 15a der Zweigleitung 15 in einem bestimmten, zeitlich begrenzten Betriebszustand geöffnet werden. Gleichzeitig wird das Absperrventil 12 vor dem ersten Verdampfer 3 geschlossen, so dass der Verdichter das Kältemittel aus dem stillgelegten Verdampferzweig saugt. Das abgesaugte versackte Kältemittel durchströmt dabei den ersten Verdampfer 3, so dass Flüssigkeitsschläge im Verdichter vermieden werden können. Hierzu ist insbesondere auch das Rückschlagventil 14 im zweiten Verdampferzweig von Bedeutung.

Um einen zu geringen Druck in einem solchen Absaugmodus zu verhindern, können nicht dargestellte Sensoren saugseitig des Verdichters 1 vorgesehen sein.

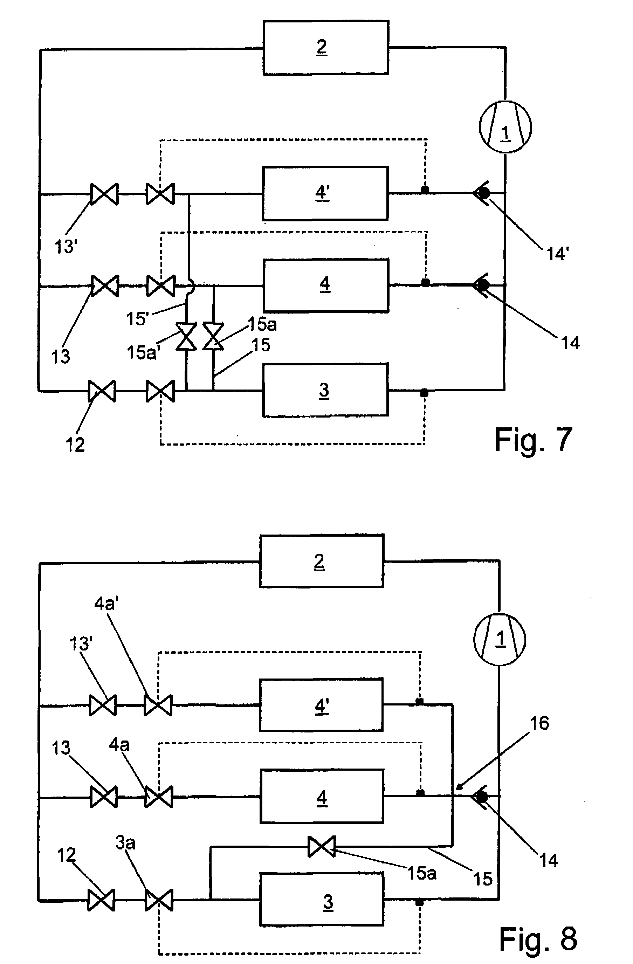

Das Ausführungsbeispiel nach Fig. 7 zeigt eine Anordnung mit zwei parallelen Klimaverdampfern 4, 4', also insgesamt drei parallelen Verdampfern 3, 4, 4'. Bei den Klimaverdampfem 4 und 4' kann es sich zum Beispiel um einen Frontverdampfer und einen Heckverdampfer handeln.

Der zusätzliche Verdampferzweig des Verdampfers 4' ist hier vollkommen symmetrisch zu dem Zweig des Verdampfers 4 aufgebaut und hat entsprechend eine zum ersten Verdampferzweig führende, absperrbare Zweigleitung 15', ein Rückschlagventil 14', ein geregeltes Expansionsventil 4a' und ein Absperrventil 13'. Allerdings ist auch ein ungeregeltes Expansionsventil möglich, wie es heutzutage auch eingesetzt wird.

Fig. 8 zeigt eine Abwandlung des Ausführungsbeispiels aus Fig. 7. Zur Einsparung von Bauteilen und Komponenten werden die beiden Klimaverdampferzweige niederdruckseitig vor der Einmündung in die Saugleitung des Verdichters 1 in einer Zusammenführung 16 zusammengeführt, so dass nachfolgend nur ein einzelnes, für beide Verdampferzweige 4, 4' wirksames Rückschlagventil vorgesehen sein muss.

Weiterhin ist nur eine einzelne Zweigleitung 15a vorgesehen, die niederdruckseitig der Klimaverdampfer 4, 4' von den der zusammengeführten Verdampferaustrittsleitungen abzweigt und hochdruckseitig des ersten Verdampfers 3 in den ersten Verdampferzweig mündet.

Grundsätzlich kann die Zweigleitung 15 aber auch an beliebiger anderer Stelle, zum Beispiel hochdruckseitig des zweiten Verdampfers 4, von den stillgelegten Verdampfern abzweigen, da in der Abwandlung nach Fig. 8 die beiden Klimaverdampferzweige auch bei Deaktivierung und somit geschlossen Ventilen 13, 13' und 14 miteinander über die Zusammenführung miteinander verbunden sind.

## Patentansprüche

1. Vorrichtung zur Kühlung eines elektrischen Energiespeichers eines Kraftfahrzeugs, insbesondere einer Lithium-Ionen-Batterie, umfassend
einen Kältekreis mit einem Verdichter (1) zur Verdichtung eines Kältemittels, einem einen Kondensator (2a) umfassenden Kondensatorglied (2) zur nachfolgenden Kühlung des Kältemittels, einem Expansionsorgan (3a) und einem Verdampfer (3), der in Wärmeaustausch mit dem elektrischen Energiespeicher bringbar ist,
wobei das Kondensatorglied (2) ein Wirkmittel (5, 6, 8, 9, 10, 11) zur wählbaren Erhöhung einer Temperatur des Kältemittels im Bereich des Kondensators (2a) umfasst,
**dadurch gekennzeichnet, dass**
die Vorrichtung derart ausgebildet ist, dass sie bei niedrigen Außentemperaturen, insbesondere unter 0° C, die Kältemitteltemperatur mittels des Wirkmittels so erhöht, dass der Kältekreis bei Verdampfertemperaturen betrieben wird, die denen im Normalbetrieb bei Umgebungstemperaturen über 0° C, insbesondere über 10° C, entsprechen, wobei die für die elektrische Energiequelle zur Verfügung stehende Kühlleistung weitgehend unverändert bleibt.

2. Vorrichtung nach Anspruch 1, **dadurch gekennzeichnet, das** Kondensatorglied (2) einen antreibbaren Lüfter (8) umfasst.

3. Vorrichtung nach Anspruch 2, **dadurch gekennzeichnet, dass** eine Förderrichtung des Lüfters (8) wählbar umkehrbar ist.

4. Vorrichtung nach einem der vorhergehenden Ansprüche, **dadurch gekennzeichnet, dass** ein den Kondensator (2a) durchströmender Luftstrom zumindest teilweise zu dem Kondensator (2a) rückführbar ist.

5. Vorrichtung nach einem der vorhergehenden Ansprüche, **dadurch gekennzeichnet, dass** das Kondensatorglied (2) einen weiteren Wärmetauscher (7) umfasst, insbesondere einen Kühlmittelkühler und/oder einen Ladeluftkühler eines Verbrennungsmotors.

6. Vorrichtung nach einem der vorhergehenden Ansprüche, **dadurch gekennzeichnet, dass** der Kältekreis zumindest einen zweiten Verdampfer (4, 4') umfasst, insbesondere einen Klimaverdampfer zur Luftkonditionierung eines Fahrgastraums.

7. Vorrichtung nach Anspruch 6, **dadurch gekennzeichnet, dass** zumindest der zweite Verdampfer (4, 4') über ein stellbares Ventil (13, 13') von dem Kältekreis absperrbar ist.

8. Vorrichtung nach Anspruch 6 oder 7, **dadurch gekennzeichnet, dass** niederdruckseitig des zweiten Verdampfers (4. 4') ein insbesondere als Rückschlagventil ausgebildetes Ventilglied (14, 14') angeordnet ist.

9. Vorrichtung nach einem der Ansprüche 6 bis 8, **dadurch gekennzeichnet, dass** der zweite Verdampfer (4, 4') in einem zu dem ersten Verdampfer (3) parallelen Zweig angeordnet ist.

10. Vorrichtung nach Anspruch 9, **dadurch gekennzeichnet, dass** zwischen den Zweigen des ersten Verdampfers (3) und des zweiten Verdampfers (4, 4') eine insbesondere absperrbare Verbindungsleitung (15) vorgesehen ist.

11. Vorrichtung nach Anspruch 10, **dadurch gekennzeichnet, dass** die Verbindungsleitung (15) in den Zweig des ersten Verdampfers hochdruckseitig des ersten Verdampfers (3) mündet.

## Claims

1. The device for cooling an electrical energy accumulator of a motor vehicle, in particular a lithium ion battery, comprising
a refrigeration circuit having a compressor (1) for compressing a refrigerant, a condenser unit (2) having a condenser (2a) for subsequently cooling the refrigerant, an expansion device (3a) and an evaporator (3), which can be brought into heat exchange with the electrical energy accumulator, wherein the condenser unit (2) has active elements (5, 6, 8, 9, 10, 11) for selectively increasing a temperature of the refrigerant in the region of the condenser (2a), **characterized in that** the device is designed such that, in the presence of low external temperatures, in particular below 0°C, the refrigerant temperature is increased by means of the active elements such that the refrigeratio circuit is operated at evaporator temperatures corresponding to those prevailing in normal operation at ambient temperatures above 0°C, in particular above 10°C, wherein the thermal capacity available for the electrical energy source remains largely unchanged.

2. The device according to claim 1, **characterized in that** the condenser unit (2) comprises a drivable fan (8).

3. The device according to claim 2, **characterized in that** an output direction of the fan (8) is selectively reversible.

4. The device according to any one of the preceding claims, **characterized in that** an air stream flowing through the condenser (2a) can be returned, at least in part, to the condenser (2a).

5. The device according to any one of the preceding claims, **characterized in that** a condenser unit (2) comprises a further heat exchanger (7), in particular a coolant radiator and/or a charge air cooler of an internal combustion engine.

6. The device according to any one of the preceding claims, **characterized in that** the refrigeration circuit comprises at least one second evaporator (4, 4'), in particular an air-conditioning evaporator for conditioning the air of a passenger compartment .

7. The device according to claim 6, **characterized in that** at least the second evaporator (4, 4') can be blocked off from the refrigeration circuit via an adjustable valve (13, 13').

8. The device according to claim 6, **characterized in that** a valve element (14, 14'), which is designed as a non-return valve in particular, is disposed on the low-pressure side of the second evaporator (4, 4').

9. The device according to any one of the claims 6 to 8, **characterized in that** the second evaporator (4, 4') is disposed in a branch that is parallel to the first evaporator (3).

10. The device according to claim 9, **characterized in that** a connecting line (15), which is blockable, in particular, is provided between the branches of the first evaporator (3) and the second evaporator (4, 4').

11. The device according to claim 10, **characterized in that** the connecting line (15) leads into the branch of the first evaporator on the high-pressure side of the first evaporator (3).

## Revendications

1. Dispositif servant au refroidissement d'un accumulateur d'énergie électrique d'un véhicule automobile, en particulier d'une batterie à ion lithium, comprenant :
un circuit de froid comprenant un compresseur (1) servant à la compression d'un fluide frigorigène, un élément de condenseur (2) comprenant un condenseur (2a) et servant au refroidissement ultérieur du fluide frigorigène, un détendeur (3a) et un évaporateur (3) qui peut être placé en échange de chaleur avec l'accumulateur d'énergie électrique,
où l'élément de condenseur (2) comprend un moyen actif (5, 6, 8, 9, 10, 11) servant à l'augmentation - pouvant être choisie - d'une température du fluide frigorigène dans la zone du condenseur (2a),
**caractérisé en ce que**
le dispositif est conçu de manière telle que, en cas de températures extérieures basses, en particulier inférieures à 0°C, il augmente, à l'aide du moyen actif, la température du fluide frigorigène de telle façon que le circuit de froid est actionné à des températures d'évaporateur qui correspondent à celles observées au cours du fonctionnement normal à des températures ambiantes supérieures à 0°C, en particulier supérieures à 10°C, où la puissance de refroidissement disponible pour la source d'énergie électrique reste dans une large mesure inchangée.

2. Dispositif selon la revendication 1, **caractérisé en ce que** l'élément de condenseur (2) comprend un ventilateur (8) pouvant être actionné.

3. Dispositif selon la revendication 2, **caractérisé en ce que** l'on peut choisir d'inverser le sens de déplacement d'air du ventilateur (8).

4. Dispositif selon l'une quelconque des revendications précédentes, **caractérisé en ce qu'**un flux d'air traversant le condenseur (2a) peut être réintroduit au moins partiellement jusqu'au condenseur (2a).

5. Dispositif selon l'une quelconque des revendications précédentes, **caractérisé en ce que** l'élément de condenseur (2) comprend un autre échangeur de chaleur (7), en particulier un radiateur à liquide de refroidissement et / ou un refroidisseur d'air de suralimentation d'un moteur à combustion interne.

6. Dispositif selon l'une quelconque des revendications précédentes, **caractérisé en ce que** le circuit de froid comprend au moins un deuxième évaporateur (4, 4'), en particulier un évaporateur de climatisation servant au conditionnement de l'air en circulation dans l'habitacle d'un véhicule.

7. Dispositif selon la revendication 6, **caractérisé en ce qu'**au moins le deuxième évaporateur (4, 4') peut être séparé du circuit de froid, par une soupape réglable (13, 13').

8. Dispositif selon la revendication 6 ou 7, **caractérisé en ce qu'**un élément de soupape (14, 14'), conçu en particulier comme un clapet de non-retour, est disposé côté basse pression du deuxième évaporateur (4, 4').

9. Dispositif selon l'une quelconque des revendications 6 à 8, **caractérisé en ce que** le deuxième évaporateur (4, 4') est disposé dans une conduite de dérivation parallèle au premier évaporateur (3).

10. Dispositif selon la revendication 9, **caractérisé en ce qu'**il est prévu, entre les conduites de dérivation du premier évaporateur (3) et du deuxième évaporateur (4, 4'), une conduite de connexion (15) pouvant en particulier être fermée.

11. Dispositif selon la revendication 10, **caractérisé en ce que** la conduite de connexion (15) débouche dans la conduite de dérivation du premier évaporateur, côté haute pression du premier évaporateur z.
